**Europäisches Patentamt**

**European Patent Office**

**Office européen des brevets**

(19)

(11) Veröffentlichungsnummer: **0 098 930**
**B1**

## (12) EUROPÄISCHE PATENTSCHRIFT

(45) Veröffentlichungstag der Patentschrift:
**14.09.88**

(21) Anmeldenummer: **83104460.7**

(22) Anmeldetag: **06.05.83**

(51) Int. Cl.⁴: **B 23 Q 15/16,** G 05 B 19/405

(54) Verfahren und Einrichtung zum Vermessen eines Werkzeuges in einer Werkzeugmaschine.

(30) Priorität: **18.05.82 DE 3218754**

(43) Veröffentlichungstag der Anmeldung:
**25.01.84 Patentblatt 84/4**

(45) Bekanntmachung des Hinweises auf die Patenterteilung:
**14.09.88 Patentblatt 88/37**

(84) Benannte Vertragsstaaten:
**AT CH FR GB IT LI**

(56) Entgegenhaltungen:
**US - A - 3 794 814**
**US - A - 4 031 368**
**US - A - 4 131 837**

(73) Patentinhaber: **Friedrich Deckel Aktiengesellschaft,**
**Plinganserstrasse 150, D-8000 München 70 (DE)**

(72) Erfinder: **Geiger, Michael, Ina-Seidel-Weg 8,**
**D-8130 Starnberg (DE)**

ACTORUM AG

## Beschreibung

Die Erfindung betrifft ein Verfahren der im Oberbegriff des Anspruches 1 genannten Art sowie eine Einrichtung zur Durchführung dieses Verfahrens.

Die Überwachung des Werkzeugverschleisses bzw. eines Werkzeugbruches ist vor allem bei modernen NC-Werkzeugmaschinen von grosser Bedeutung. Neben den Verfahren, bei denen während des Werkzeugeingriffes deren Leistungsaufnahme als Indikator für den Werkzeugzustand gemessen wird, wird vor allem bei kleineren Bohrwerkzeugen oder dergleichen mit geringer Leistungsaufnahme dessen Länge regelmässig gemessen.

Es sind schon Verfahren bekannt, bei denen das Werkzeug dazu jeweils zu besonderen Messstationen gefahren werden muss, wo es dann beispielsweise gegen eine Referenzfläche angelegt wird, wobei die Stellung des Werkzeughalters gemessen wird. Ein Nachteil dieses bekannten Verfahrens wird vor allem darin gesehen, dass der Messvorgang die Hauptzeit der Maschine verringert. Ausserdem ist eine Messung durch Berührungskontakt sehr ungünstig, da das Werkzeug äusserst langsam an diese Fläche angelegt werden muss, um es nicht zu beschädigen. Dieser Vorgang erfordert deshalb darauf besonders abgestimmte Steuerungsmassnahmen. Der Steuerungsaufwand sowie der zeitliche Aufwand des bekannten Messverfahrens sind jedenfalls so gross, dass im allgemeinen auf eine direkte Verschleissmessung vor jedem Zustellen des Werkzeuges zum Werkstück verzichtet wird.

Die US-A-4 131 837 zeigt eine Einrichtung, bei der die Wege von Werkzeug- bzw. Werkstückschlitten sowie eine Werkzeugauslenkung des im Eingriff befindlichen Werkzeuges gemessen und mit Referenzwerten verglichen wird, um auf diese Weise einen Rückschluss auf eine Fehlfunktion der Maschine oder ihrer Komponenten zu ermöglichen. Eine direkte Verschleissmessung der Werkzeugschneide während des Zustellens bzw. Zurückziehens des Werkzeuges ist nicht vorgesehen.

Es ist die Aufgabe der Erfindung, ein Verfahren der im Oberbegriff des Anspruches 1 genannten Art sowie eine Einrichtung zur Durchführung des Verfahrens zu schaffen, welche eine Messung im wesentlichen ohne Verringerung der Hauptzeit ermöglicht und welche steuerungstechnisch einfach ist.

Diese Aufgabe ist erfindungsgemäss durch die im Kennzeichen des Anspruches 1 bzw. des Anspruches 8 genannten Merkmale gelöst.

Das Werkzeug passiert auf seinem Zustellweg zum oder vom Werkstück, den es in jedem Fall durchlaufen muss und der in die nicht vermeidbare Nebenzeit fällt, die optische Messeinrichtung. Dabei wird die Position des Werkzeughalters, im allgemeinen ein Spindelkopf oder dergleichen, im Augenblick des Durchtritts der Werkzeugspitze durch eine definierte Messebene gemessen und mit einer Soll-Position für ein intaktes Werkzeug verglichen. Die Differenz der Ist-Position zur Soll-Position ist ein Mass für eine Längenänderung des Werkzeuges infolge Werkzeugbruches oder Werkzeugverschleisses. Dabei hängt es von der erzielbaren Messgenauigkeit ab, welcher Verschleissgrad gemessen werden kann.

Die Soll-Position kann vom Werkzeugeinsteller vorgegeben werden, wobei dann sowohl beim Zustellen zum sowie beim Zurückziehen vom Werkstück das Werkzeug vermessen und mit dem Soll-Zustand verglichen werden kann. Auf diese Weise ist gleichzeitig auch eine gewisse Kontrolle möglich, ob das richtige Werkzeug zugestellt wird.

Die US-A-3 794 314 zeigt zwar schon eine Einrichtung, bei welcher die Vorgabesignale einer Wegsteuerung mit den Signalen eines unabhängigen Wegmesssystems verglichen werden; dieses Wegmesssystem ist ein Laser-Interferometer, welches in bekannter Weise nach dem Reflexionsprinzip arbeitet. Bei dieser Entgegenhaltung durchläuft das Werkzeug jedoch keine optische Messebene zum Zwecke einer Werkzeugverschleissmessung.

Nach einer Ausgestaltung der Erfindung ist vorgesehen, dass die Soll-Position auf dem Zustellweg zum Werkstück ermittelt und mit der beim Zurückziehen des Werkzeuges gemessenen Ist-Position des Werkzeughalters verglichen wird. Auch damit ist eine vollständige Überwachung möglich, bei der, ausgehend vom ersten Einsatz des neu eingestellten Werkzeuges, nach jedem Einsatz eine Vermessung durchgeführt wird.

In einer weiteren Ausgestaltung der Erfindung wird vorgeschlagen, dass die Vermessung mit Hilfe einer Lichtschranke erfolgt. Das Werkzeug wird beim Zustellen und Zurückziehen durch eine Lichtschranke geführt, wobei die Unterbrechung und die Freigabe des Lichtstrahles jeweils als elektrische Signale ausgewertet werden; für diese Auswertung ist vorzugsweise eine elektronische Auswerte-Einheit vorgesehen. Bei der Abweichung der Ist-Position des Werkzeughalters von der Soll-Position wird in der Auswerte-Einheit ein Warnsignal erzeugt, welches beispielsweise zu einer Warnanzeige, zur Abschaltung der Maschine oder zum selbsttätigen Einwechseln eines neuen Werkzeuges führen kann.

Die Lichtschranke ist in einer Ausgestaltung der Erfindung fest im Maschinengestell angeordnet. Wenn dem Werkzeug ausser der Zustellbewegung noch andere Bewegungen zugeordnet sind, ist darauf zu achten, dass es auf seinem Zustellweg zum und vom Werkstück immer durch die Lichtschranke geführt wird.

Zur Durchführung des erfindungsgemässen Verfahrens dient eine Einrichtung gemäss dem Anspruch 8. Die optische Messeinrichtung ist vorzugsweise eine Laser-Lichtschranke, welche quer zum Zustellweg des Werkzeuges ausgerichtet ist. Laser-Lichtschranken liefern einen sehr scharf gebündelten Lichtstrahl, so dass eine hohe Messgenauigkeit erzielbar ist.

Weitere Vorteile und Merkmale der Erfindung sind in den Patentansprüchen, der Zeichnung sowie der Beschreibung enthalten.

Ein Ausführungsbeispiel der Erfindung ist in der Zeichnung dargestellt und im folgenden näher beschrieben. Es zeigen:

Fig. 1 schematisch ein Bearbeitungszentrum in einer Draufsicht;

Fig. 2 eine Werkzeugaufnahme mit einem Bohrwerkzeug.

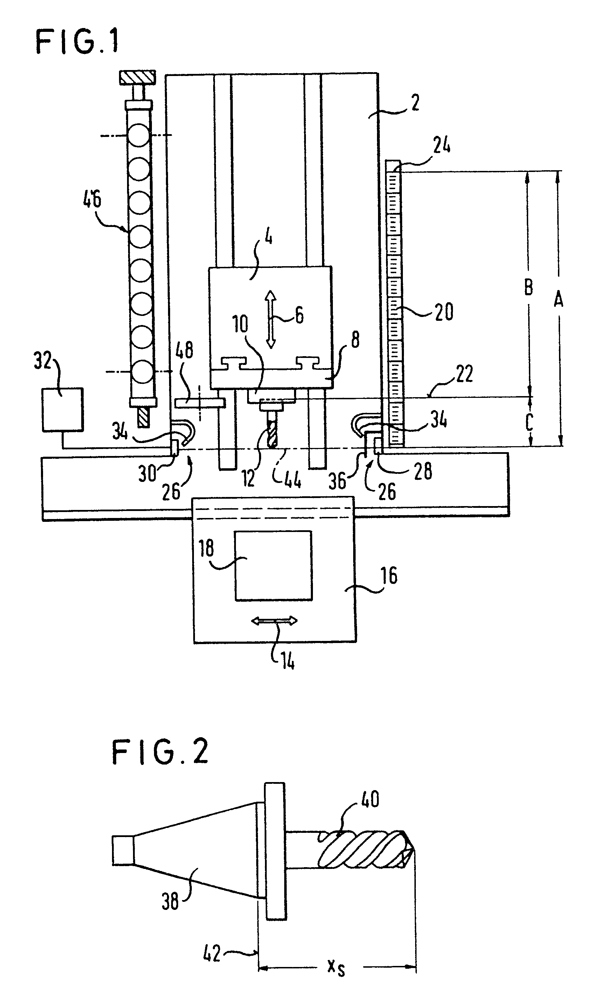

Die in Fig. 1 dargestellte Werkzeugmaschine umfasst ein Maschinenbett 2, auf welchem ein Maschinenständer 4 horizontal in Richtung des Pfeiles 6 zustellbar gelagert ist. Am Maschinenständer 4 ist vertikal verschiebbar ein Spindelkopf 8 angeordnet, welcher in einer Spindel 10 ein Werkzeug 12 trägt. Der Maschinenständer 2 trägt an seiner Vorderfront einen horizontal in Richtung des Pfeiles 14 verschiebbar gelagerten Werkstücktisch 16, auf welchem ein Werkstücktisch 18 aufspannbar ist.

Der Weg des Maschinenständers 4 wird mittels eines schematisch angedeuteten Massstabes 20 gemessen, und zwar wird beispielsweise die Lage einer an der Spindel 10 festgelegten Ebene 22 gegenüber dem Nullpunkt 24 des Massstabes 20 gemessen.

Am Maschinenständer 2 bzw. an fest mit diesem verbundenen Bauteilen ist eine Laser-Lichtschranke 26 angeordnet mit einem Geber 28 und einem diesem gegenüberliegenden Sensor 30. Die Lichtschranke ist so angeordnet, dass der Lichtstrahl quer zur Zustellrichtung 6 des Werkzeuges 12 ausgerichtet ist. Wenn das Werkzeug eine bestimmte, durch die Lage der Lichtschranke fesgelegte Höhenstellung einnimmt, passiert die Werkzeugspitze bei der Zustellung die Lichtschranke und deckt diese ab. Dieser Vorgang kann als elektrisches Signal ausgewertet werden. Beim Zurückziehen gibt das Werkzeug den Lichtstrahl wieder frei, was wiederum als Signal ausgewertet werden kann.

Zur Auswertung dieser Signale ist eine elektronische Auswerte-Einheit 32 vorgesehen, die mit dem Sensor 30 elektrisch verbunden ist.

Zum Sauberhalten des optischen Systems von Kühlwasser, Spänen und anderen Verschmutzungen sind dem Geber 28 und dem Sensor 30 jeweils Blasdüsen 34 zugeordnet, durch welche Blasluft auf diese Bauteile geblasen werden kann. Ausserdem ist der Geber 28 noch durch eine Abdeckkappe 36 geschützt, die während des Messvorganges fortgeklappt werden kann.

Fig. 2 zeigt eine Werkzeugaufnahme 38 mit einem eingespannten Bohrwerkzeug 40. Der Werkzeugeinsteller stellt das genaue Mass $x_s$ von der Werkzeugspitze bis zu einer Ebene 42 fest; die Ebene 42 fällt beim in die Spindel eingesetzten Werkzeug mit der Ebene 22 zusammen. Wenn das Werkzeug intakt ist, muss gelten C = $x_s$. Bei einer Abweichung davon liegt Verschleiss oder Werkzeugbruch vor.

Die Funktion der Einrichtung ist folgende:

Wenn das Werkzeug 12 nach dem Einsatz gewechselt werden soll, wird es ausser Eingriff mit dem Werkstück 18 gebracht und dann auf der Höhe der Lichtschranke zurückgezogen, bis es den Laserstrahl 44 freigibt; in diesem Augenblick wird die durch den Buchstaben B bezeichnete Lage des Ständers 4 gemessen. Aus der Grösse B und der feststehenden Grösse A – Abstand zwischen Nullpunkt 24 und Laserstrahl 44 – ergibt sich die Grösse C nach der Formel C = A − B. Wenn C > $x_s$, dann liegt Verschleiss oder Werkzeugbruch vor und die Auswerte-Einheit 32 erzeugt ein Warnsignal, welches in der vorne beschriebenen Weise ausgewertet wird.

Die Grösse $x_s$ kann dabei vom Werkzeugeinsteller in die Auswerte-Einheit eingegeben werden. Sie kann jedoch auch beim Zustellen des Werkzeuges durch die Messeinrichtung selbst ermittelt werden. Dabei ergibt sich die Grösse $x_s$ = C (für das intakte Werkzeug) in dem Augenblick, in welchem die Werkzeugspitze den Laserstrahl unterbricht, wiederum aus der Messung der Grösse B nach der Formel C = A − B.

Für den Wechsel der Werkzeuge ist in bekannter Weise ein Wechselarm 48 vorgesehen, welcher ein neues Werkzeug einem Werkzeugmagazin 46 entnimmt und gegen das gebrauchte Werkzeug tauscht.

**Patentansprüche**

1. Verfahren zum Messen des Verschleisses eines in einem Werkzeughalter aufgenommenen, vorschubbeweglichen Werkzeuges (12), wobei das Werkzeug (12) mit seiner Spitze zu einem Referenzort in einer Referenzebene (44) gefahren und dabei die Stellung des Werkzeughalters gemessen sowie mit einer Soll-Stellung verglichen wird, die der Stellung des Werkzeughalters bei Anlage der keinen Verschleiss aufweisenden Spitze am Referenzort (44) entspricht, dadurch gekennzeichnet, dass die Spitze des Werkzeuges (12) auf dem Zustellweg des Werkzeuges (12) zum Werkstück (18) und/oder auf dem Rückzugsweg vom Werkstück (18) eine optische Messeinrichtung (28, 30) mit einer etwa quer zum Werkzeug stehenden, als Referenzort dienenden, den Durchgang der Spitze feststellenden optischen Messebene (44) passiert.

2. Verfahren nach Anspruch 1, dadurch gekennzeichnet, dass die dem Durchgang der Spitze entsprechende Ist-Stellung mit einer ausserhalb der Messeinrichtung (28, 30) ermittelten Soll-Stellung verglichen wird.

3. Verfahren nach Anspruch 1, dadurch gekennzeichnet, dass die Soll-Stellung auf dem Zustellweg zum Werkstück (18) ermittelt und mit der beim Zurückziehen vom Werkstück (18) gemessenen Ist-Stellung verglichen wird.

4. Verfahren nach einem der Ansprüche 1 bis 3, dadurch gekennzeichnet, dass die Ist-Stellung und die Soll-Stellung des Werkzeughalters (4) im Augenblick des Durchgangs der Werkzeugspitze durch eine Lichtschranke (44) gemessen werden.

5. Verfahren nach einem der Ansprüche 1 bis 4, dadurch gekennzeichnet, dass die Ist-Stellung und Soll-Stellung des Werkzeughalters (4) als elektrische Signale dargestellt und in einer elektronischen Auswerte-Einheit (32) ausgewertet werden.

6. Verfahren nach Anspruch 5, dadurch gekennzeichnet, dass bei Abweichungen zwischen Soll-und Ist-Stellung des Werkzeughalters (4) in der Auswerte-Einheit (32) ein Warnsignal oder dergleichen erzeugt wird.

7. Verfahren nach einem der Ansprüche 4 bis 6, dadurch gekennzeichnet, dass die Lichtschranke (44) in der Werkzeugmaschine fest angeordnet ist und dass das Werkzeug (12) auf seinem Zustellweg zum und vom Werkstück (18) immer durch die Lichtschranke (44) geführt wird.

8. Einrichtung zur Durchführung des Verfahrens nach Anspruch 1, umfassend einen vorschubbeweglichen Werkzeughalter (4) zum Halten eines Werkzeuges (12), einen definierten Referenzort in einer Referenzebene (44), an welche die Spitze des Werkzeuges (12) anlegbar ist und eine Positionsmesseinrichtung (20, 22) zum Messen der Stellung des Werkzeughalters, dadurch gekennzeichnet, dass die als Referenzort dienende Referenzebene (44) durch eine optische Messeinrichtung (28, 30), welche im Zustell- bzw. Rückzugsweg des Werkzeuges (12) und etwa quer zur Zustell- bzw. Rückzugsrichtung steht, definiert ist, und eine Auswerteeinrichtung (32) an die optische Messeinrichtung (28, 30) angeschlossen ist.

9. Einrichtung nach Anspruch 8, dadurch gekennzeichnet, dass die optische Messeinrichtung (28, 30) eine Lichtschranke oder dergleichen ist.

10. Einrichtung nach einem der Ansprüche 8 oder 9, dadurch gekennzeichnet, dass die optische Messeinrichtung durch eine einen Geber (28) und einen Sensor (30) umfassende Laser-Lichtschranke gebildet wird, welche quer zur Zustellrichtung des Werkzeuges (12) auf dessen Zustellweg zum Werkstück (18) hin oder vom Werkstück (18) weg ausgerichtet ist.

11. Einrichtung nach einem der Ansprüche 8 bis 10, dadurch gekennzeichnet, dass eine elektronische Auswerte-Einheit (32) zur Auswertung der Signale der optischen Messeinrichtung (28, 30) sowie zur Erzeugung eines Warnsignals bei Abweichung der Soll-Stellung von der Ist-Stellung des Werkzeughalters (4) vorgesehen ist.

12. Einrichtung nach einem der Ansprüche 10 oder 11, dadurch gekennzeichnet, dass eine von der Auswerte-Einheit (32) ansteuerbare Abdunkelungsklappe (36) oder dergleichen für den Geber (28) der Laser-Lichtschranke vorgesehen ist.

13. Einrichtung nach einem der Ansprüche 10 bis 12, dadurch gekennzeichnet, dass Blasdüsen (34) oder dergleichen zur Sauberhaltung des Gebers (28) sowie des Sensors (30) der Laser-Lichtschranke vorgesehen sind.

**Claims**

1. A method of measuring the wear on a tool (12) which is received in a toolholder and is movable in a feed direction, the tip of the tool (12) being moved to a reference position in a reference plane and the position of the toolholder is then measured and is compared with a desired position which corresponds to the position of the toolholder when the non-worn tip is in register with the reference position (44), characterised in that, during travel of the tool (12) towards the workpiece (18) and/or during travel away from the workpiece (18), the tip of the tool passes through an optical measuring device (28, 30) having an optical measuring plane (44) which extends approximately transversely of the path of the tool and which serves as a reference position and detects the passage of the tip.

2. A method as claimed in claim 1, characterised in that the actual position corresponding to the passage of the tip is compared with a desired position ascertained outside the measuring device (28, 30).

3. A method as claimed in claim 1, characterised in that the desired position is ascertained on the feed path towards the workpiece (18) and is compared with the actual position measured during retraction from the workpiece (18).

4. A method as claimed in any one of claims 1 to 3, characterised in that the actual position and desired position of the toolholder (4) are measured at the instant at which the tip of the tool passes through a light barrier (44).

5. A method as claimed in any one of claims 1 to 4, characterised in that the actual position and the desired position of the toolholder (4) are represented as electrical signals and are evaluated in an electronic evaluation unit (32).

6. A method as claimed in claim 5, characterised in that a warning signal or the like is produced in the evaluation unit (32) in the event of differences between the desired and actual positions of the toolholder (4).

7. A method as claimed in any one of claims 4 to 6, characterised in that the light barrier (44) is fixedly disposed in the machine tool and that the tool (12) is always conducted through the light barrier on its path to and from the workpiece (18).

8. An apparatus for performing the method claimed in claim 1, comprising a toolholder (4), movable in a feed direction, for holding a tool (12), a defined reference position in a reference plane (44) to which the tip of the tool (12) can be applied, and a position-measuring device (20, 22) for measuring the position of the toolholder, characterised in that the reference plane (44) serving as a reference position is defined by an optical measuring device (28, 30) which is located in the feed and return path of the tool (12) and approximately transversely of the forward and return direction, and an evaluation device (32) is connected to the optical measuring device (28, 30).

9. An apparatus as claimed in claim 8, characterised in that the optical measuring device (28, 30) is a light barrier or the like.

10. An apparatus as claimed in any one of claims 8 or 9, characterised in that the optical measuring device is formed by a laser light barrier which comprises a transmitter (28) and a sensor (30) and which is aligned transversely of the direction of the tool (12) on its feed path towards the workpiece (18) or away from the workpiece (18).

11. An apparatus as claimed in any one of claims 8 to 10, characterised in that an electronic evaluation unit (32) is provided for the evaluation of the signals of the optical measuring device (28, 30) and for producing a warning signal in the event of a difference between the desired position and the actual position of the toolholder (4).

12. An apparatus as claimed in any one of claims 10 or 11, characterised in that a masking flap (36) or the like, controllable by the evaluation unit (32), is provided for the transmitter (28) of the laser light barrier.

13. An apparatus as claimed in any one of claims 10 to 12, characterised in that blast nozzles (34) or the like are provided for keeping the transmitter (28) and the sensor (30) of the laser light barrier clean.

**Revendications**

1. Procédé de mesure de l'usure d'un outil (12) logé dans porte-outil, et monté mobile selon un mouvement d'avance de manière à être dirigé avec sa pointe vers un lieu de référence dans un plan de référence où la position du porte-outil est mesurée et comparée à une position de consigne qui correspond à la position du porte-outil lorsque la pointe non usée est située au lieu de référence (44), caractérisé en ce que la pointe de l'outil (12) pendant le parcours d'approche de celui-ci en direction de la pièce à usiner (18) et/ou sur le parcours de retour depuis la pièce à usiner (18), traverse un dispositif de mesure (28, 30) optique comportant un plan de mesure (44) optique perpendiculaire au parcours de l'outil, servant de lieu de référence, fixant le passage de la pointe.

2. Procédé selon la revendication 1, caractérisé en ce que la position réelle correspondant au passage de la pointe est comparée à une position de consigne établie hors du dispositif de mesure (28, 30).

3. Procédé selon la revendication 1, caractérisé en ce que la position de consigne est déterminée sur le parcours d'approche en direction de la pièce à usiner (18) et est comparée à la position réelle mesurée sur le trajet de retour depuis la pièce à usiner (18).

4. Procédé selon les revendications 1 à 3, caractérisé en ce que la position réelle et la position de consigne du porte-outil (4) sont mesurées à l'instant du passage de la pointe de l'outil devant une cellule photoélectrique (44).

5. Procédé selon l'une des revendications 1 à 4, caractérisé en ce que la position réelle et la position de consigne du porte-outil (4) sont représentées sous forme de signaux électriques et analysées dans une unité d'analyse (32) électronique.

6. Procédé selon la revendication 5, caractérisé en ce qu'en cas d'écart entre la position de consigne et la position réelle du porte-outil (4), un signal d'alarme ou signal similaire est produit dans l'unité d'analyse (32).

7. Procédé selon l'une des revendications 4 à 6, caractérisé en ce que la cellule photoélectrique (44) est disposée de manière fixe dans la machine-outil et en ce que l'outil (12) passe toujours devant la cellule photoélectrique (44) sur son parcours en direction de la pièce d'ouvrage (18) et sur le parcours de retour.

8. Dispositif de mise en œuvre du procédé selon la revendication 1, comportant un porte-outil (4) se déplaçant dans un mouvement d'avance et destiné à maintenir un outil (12), un lieu de référence défini dans un plan de référence (44) dans lequel peut être placée la pointe de l'outil (12), ainsi qu'un dispositif de mesure de position (20, 22), destiné à mesurer la position du porte-outil, caractérisé en ce que le plan de référence (44) servant de lieu de référence est défini par un dispositif de mesure (28, 30) optique qui se situe sur le parcours d'approche et de retour de l'outil (12) et à peu près perpendiculairement à la direction d'approche et de retour, et en ce qu'un dispositif d'analyse (32) est raccordé au dispositif de mesure (28, 30) optique.

9. Dispositif selon la revendication 8, caractérisé en ce que le dispositif de mesure (28, 30) optique est une cellule photoélectrique ou similaire.

10. Dispositif selon l'une des revendications 8 et 9, caractérisé en ce que le dispositif de mesure optique est formé par une cellule photoélectrique à laser comportant un émetteur (28) et un capteur (30), laquelle cellule est orientée perpendiculairement à la direction de déplacement de l'outil (12), sur son parcours d'approche en direction de la pièce à usiner (18) ou sur le parcours de retour à partir de la pièce à usiner (18).

11. Dispositif selon l'une des revendications 8 à 10, caractérisé en ce qu'une unité d'analyse (32) électronique est prévue pour exploiter les signaux du dispositif de mesure optique (28, 30) ainsi que pour produire le signal d'alarme en cas d'écart entre la position de consigne et la position réelle du porte-outil (4).

12. Dispositif selon l'une des revendications 10 ou 11, caractérisé en ce qu'un volet d'occultation (36) ou similaire commandé par l'unité d'analyse (32) est prévu pour émetteur (28) de la cellule photoélectrique à laser.

13. Dispositif selon l'une des revendications 10 à 12, caractérisé en ce que des buses de projection (34) ou similaires sont prévues pour maintenir propres l'émetteur (28) ainsi que le capteur (30) de la cellule photoélectrique à laser.

# FIG.1

# FIG.2